(19) Europäisches Patentamt
European Patent Office
Office européen des brevets

(11) **EP 1 918 737 A1**

(12) **EUROPEAN PATENT APPLICATION**

(43) Date of publication:
**07.05.2008 Bulletin 2008/19**

(51) Int Cl.:
*G01S 13/90* *(2006.01)*

(21) Application number: **06022989.5**

(22) Date of filing: **04.11.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK RS** | (71) Applicant: **Sula Systems Limited**<br>**Wotton under Edge**<br>**Gloucestershire GL12 7AE (GB)**<br><br>(72) Inventor: **Vigurs, Gordon**<br>**Wotton-under-Edge GL12 7 AE (GB)** |

(54) **Method of resolving ambiguity in the detection and location of moving targets in synthetic aperture radar**

(57)    A method of resolving ambiguity in the detection and location of moving targets in synthetic aperture radar (SAR) by deliberately forcing the phase histories from a target with radial velocity to be different from a target with cross-range displacement. One approach is to deliberately accelerate the phase centre of the SAR either electronically or physically by accelerating the SAR antenna mounting or the platform on which it is carried. A novel processing technique allows the separation of these different phase histories so that a target's velocity can be distinguished from its cross-range displacement and hence a correct image can be formed. This method does not require a special transmitter, receiver or antenna hardware, and can be applied to all existing SAR systems. As this technique exploits the movement of the phase centre of a SAR antenna it allows the platform to move along any trajectory, including planned and unplanned manoeuvres.

Received Doppler :

— · · — from a stationary scatterer in the centre of the scene

········· from a stationary scatterer with cross-range offset

— — — from a moving scatterer in the centre of the scene

Figure 1

Printed by Jouve, 75001 PARIS (FR)

EP 1 918 737 A1

**Description**

The present invention relates to a method of resolving ambiguity in the detection and location of moving targets in synthetic aperture radar.

Synthetic aperture radar (SAR) is an active microwave imaging method. Conventional SAR operates by correlating a number of radar returns received during movement of the radar platform, which is generally an aircraft or satellite, with a predicted reference data set. This technique requires the SAR platform to move on a linear trajectory (i.e. straight and level flight). A problem encountered in the prior art is that there is complete ambiguity between the change in phase across a sequence of pulses of the received signal (phase history) given by a cross-range displacement and that given by a target with a non-zero velocity towards or away from the synthetic aperture. The change in phase is normally interpreted by the conventional SAR as a displacement in the cross-range direction, so the moving target will be displayed in the wrong position within the image. This is known as the azimuth ambiguity problem. Current SAR techniques require an interleaved Ground Moving Target Indication (GMTI) that uses non-SAR radar techniques to overcome the azimuth ambiguity problem. The non-SAR technique uses only the physical aperture size of the radar for imaging, hence the GMTI mode has reduced resolution compared to a SAR.

Although the linear trajectory used for conventional SAR gives some advantages, principally the ability to use Fast Fourier Transforms which greatly reduces the amount of computation, it also gives rise to some other significant drawbacks:

- the straight and level trajectory flown by conventional airborne SAR platforms reduces the routeing options available to image a particular scene, particularly in mountainous terrain, and increases the platform's vulnerability to hostile action. In satellite applications, the requirement for an approximately linear trajectory constrains the use of SAR on highly elliptical orbits.

- conventional SAR systems are often required to generate strip-maps along routes that include turns at multiple waypoints. The SAR system patches together a continuous string of images to yield the strip, and will continue to do so until commanded otherwise, or until the vehicle deviates too far from the original flight path. In the event of such a deviation, a new strip-map can begin immediately but this may still lead to gaps in coverage.

The object of the present invention is to overcome the azimuth ambiguity problem with conventional SAR by deliberately forcing the phase histories from a target with radial velocity to be different from a target with cross-range displacement.

One method for deliberately forcing the phase histories from a target with radial velocity to be different from a target with cross-range displacement is to deliberately accelerate the phase centre of the SAR (referred to as non-linear SAR). The phase centre acceleration can be generated electronically or by physically accelerating the SAR antenna mounting or the platform on which it is carried. A novel processing technique allows the separation of these different phase histories so that a target's velocity can be distinguished from its cross-range displacement and hence a correct image can be formed.

The advantages of the present invention are:

- the non-linear SAR technique can determine the correct location of both stationary and moving targets in a single process, rather than the interleaved SAR and Ground Moving Target Indication (GMTI) modes of conventional systems.

- the non-linear SAR technique uses the full synthetic aperture to determine the location of moving targets. The positional accuracy of moving targets given by this technique is therefore significantly better than that of conventional GMTI techniques whose cross-range accuracy is determined by the much smaller physical aperture size. Furthermore, the longer integration time used by non-linear SAR compared to conventional GMTI modes gives a significant improvement in detection sensitivity.

- the non-linear SAR technique can reduce or eliminate the smearing of a moving target over multiple down-range cells. It can also reduce or eliminate the smearing of a moving target over multiple cross-range cells.

- the non-linear SAR allows the platform to move in any trajectory, including planned and unplanned manoeuvres, as long as the radar antenna can still be steered to observe the scene being imaged. The greater the manoeuvre, the more effective the non-linear SAR technique becomes; if the platform moves in a straight and level trajectory, the non-linear SAR technique becomes equivalent to conventional SAR.

■ the ability to manoeuvre during the SAR integration period allows much greater flexibility in the choice of routes for the platform, and also allows the platform to execute frequent turns along the route, giving a significant improvement in platform survivability and flight path planning. It also makes feasible the use of SAR on satellites with highly elliptical orbits.

■ the removal of constraints on platform trajectory allows non-linear SAR to create continuous strip-maps, even when its route contains multiple turns.

■ the non-linear SAR technique can be applied to a wide range of systems, including forward-looking as well as sideways-looking radars. The resolution achievable is dictated by the width of the synthetic aperture, so platforms fitted with forward-looking radars would need to jink or weave if they want to produce SAR images along their mean line of advance.

■ non-linear SAR does not require special transmitter, receiver or antenna hardware, and so could be applied to most or all existing SAR systems. The ability to detect targets' radial velocity and correctly locate moving targets means that the additional antennas needed by some conventional GMTI techniques would be unnecessary for non-linear SAR.

The present invention will now be described using the method of deliberately accelerating the phase centre of the SAR antenna to force the phase histories from a target with radial velocity to be different from a target with cross-range displacement. The description will also refer to the following drawings:

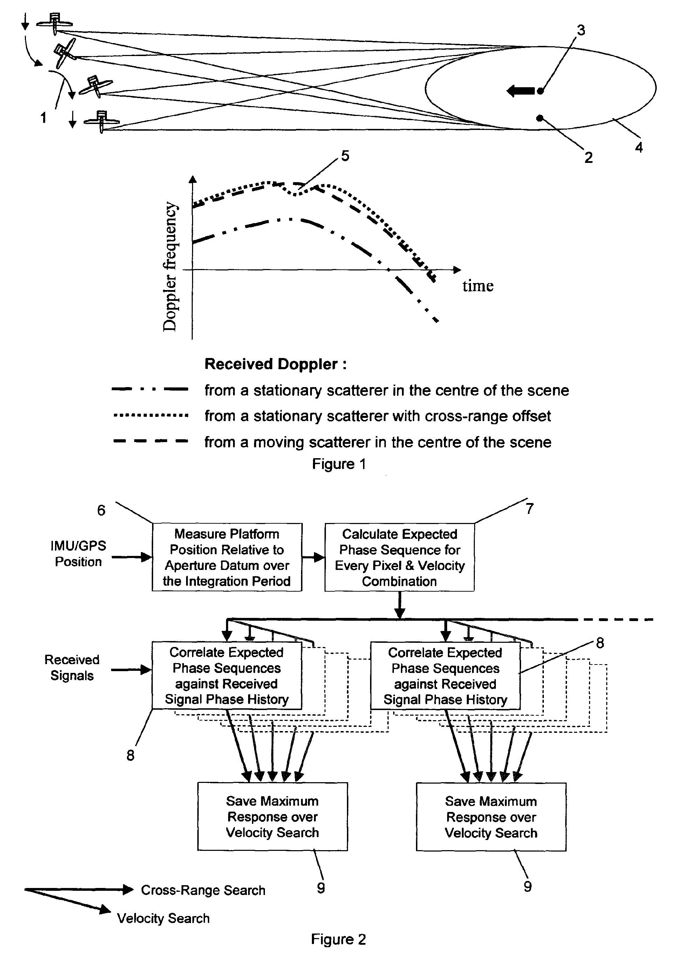

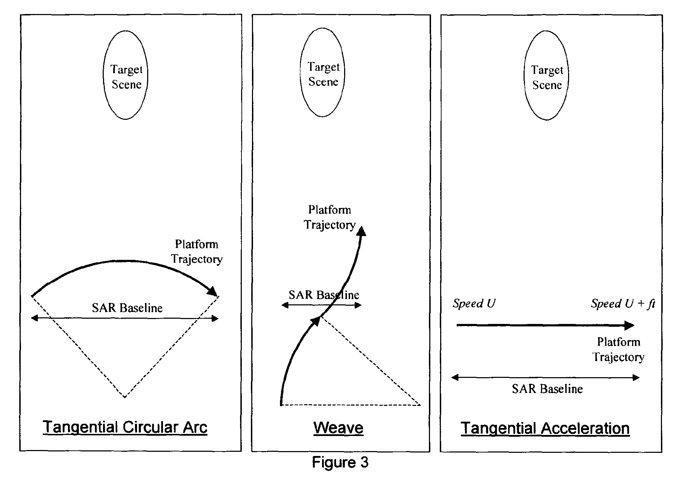

■ figure 1 shows platform acceleration separates the effects of radial velocity and cross-range
■ figure 2 shows an example of non-linear SAR processing
■ figure 3 shows example platform trajectories

The fundamental idea behind non-linear SAR is illustrated in figure 1 using the case of an airborne SAR although other applications would also use this invention. Deliberately accelerating the phase centre of the SAR 1 produces different phase histories 5 for a target with radial velocity 3 and a target with cross-range displacement 2. The novel processing technique, described later allows these phase histories to be separated, giving accurate estimates of both the actual position and radial velocity of every scatterer 2 & 3 within the scene 4 regardless of their motion.

The actual positions of the target and platform, $\underline{r}_r$ and $\underline{r}_p$ respectively, are expressed as functions of time $t$. The actual path length $|\underline{r}_p(t) - \underline{r}_r(t)|$ would then determine the change in phase of the received signal as a function of time over the integration period ($t_0$ to $t_1$).

For every assumption of the target's cross-range position and radial velocity, expressed as the assumed position of the target $\hat{r}_r(t)$, the resulting path length can be determined as a function of time. The difference between the actual and the expected phase of the received signal would then be:

$$\frac{4\pi}{\lambda}(\Delta - \Delta_0) \qquad \text{where} \quad \Delta - \Delta_0 = \left|\underline{r}_p(t) - \underline{r}_r(t)\right| - \left|\underline{r}_p(t) - \hat{\underline{r}}_r(t)\right| \qquad (1)$$

The best estimate of the target's cross-range position and radial velocity would then be given by the peak of the correlation integral,

$$I = \frac{1}{(t_1 - t_0)}\int_{t_0}^{t_1} \exp\left(\frac{4\pi}{\lambda} j(\Delta - \Delta_0)\right) dt \qquad (2)$$

where the integral is evaluated for all possible target cross-range positions and radial velocities.

This integral is appropriate for a continuous wave (CW) SAR. The processing for a more common pulse SAR would use discrete sample from the continuous functions of SAR platform and target positions.

One possible approach to the novel non-linear SAR processing technique is illustrated conceptually in figure 2. An IMU measures the actual platform trajectory 6. Then for each pixel in the image, the processing applies the following conceptual steps:

■ the measured platform trajectory is used to calculate the expected phase history of a scatterer 7 (ie the expected phase of each pulse received from that scatterer) that has a trial radial velocity $v$ and is in the pixel of interest at time $t = t_i$. A series of such phase histories are calculated 8: one for each radial velocity $v$ within the unambiguous ambit given by the radar's Pulse Repetition Frequency (PRF).

■ the received signal corresponding to the down-range position of the pixel is then correlated against each of the phase histories. The trial radial velocity giving the best correlation corresponds to the radial velocity of the brightest scatterer within that pixel 9. The amplitude of the correlation gives a measure of the scatterer's Radar Cross Section (RCS).

A target with a non-zero radial velocity may travel through more than one down-range bin during the integration time. Over the entire integration period, the signal received in each down-range bin from a moving target will therefore be less than that from a stationary scatterer with the same RCS. If the target is an isotropic point scatterer moving with a constant radial velocity through N down-range cells, conventional SAR processing would give the same response in each down-range cell but with $1/N$ of the intensity of an identical, stationary target. The resulting image would be smeared across all the down-range cells through which the target moved.

The Non-Linear SAR technique could operate in the same manner, producing the same smearing of the image in the down-range direction. However, the Non-Linear SAR processing explicitly determines the target's radial velocity. For each radial velocity $v$ used in the correlation process, it is a simple matter to determine the corresponding down-range position of the scatterer for every pulse within the integration period. The sequence of returns from the corresponding down-range bins may then be used as the received signal corresponding to the trial radial velocity v, and correlated against the expected return from the scatterer.

The acceleration of the phase centre of the SAR antenna in this non-linear SAR technique can be carried out electronically or by moving the platform or the SAR antenna mounting. There are various methods of accelerating the SAR platform and each method has benefits for different applications. For example, accelerating the phase centre using a curved or weaving flight profile of the platform can be used for forward or sideward looking SAR and is applicable to fast jet aircraft or missile applications, see figure 3. Linear tangential acceleration can also be used for sideward looking SAR. The highly elliptical orbit of a satellite could also be used to provide the required acceleration for space applications.

In practice, it is not necessary to correlate the received signal against the phase histories corresponding to every possible radial velocity. Techniques can be used to narrow down the velocity search rapidly, reducing the number of correlations needed for each pixel by an order of magnitude.

The number of correlations needed to find the target's radial velocity giving the correlation peak, and hence to produce the SAR image, may be significantly reduced by using improvements to the radial velocity search. The search algorithm can be represented as a Fresnel function, the characteristics of which are dictated by the Doppler resolution. This knowledge may be exploited to reduce the number of correlations needed to find the target radial velocity giving the correlation peak, and hence to produce the SAR image.

The improved velocity search first derives a coarse approximation of the target's radial velocity and the amplitude of the correlation. This result is then used in an iterative process, refining the estimates of radial velocity and amplitude at each stage. Another possible approach would be to use the efficiency of Fast Fourier Transforms (FFT) implemented in Digital Signal Processing chips. The correlation integral (2) can be applied as two Fourier transforms followed by an inverse Fourier transform, all three operations employing the standard, well documented, FFT algorithm.

Another possible approach would be to concentrate only on regions of the image containing bright scatterers. These regions could be mapped at the maximum achievable resolution, while regions containing only low intensity scatterers would be processed at a reduced resolution. This could be achieved by increasing the number of pulses used in the correlation, and hence the radial velocity resolution, in a number of stages. At each stage, only those regions with an intensity above a threshold value would be taken forward for higher resolution processing. This technique effectively adds terms to the previous iteration rather than evaluating the correlation integral completely at each stage. The processing will therefore never exceed the $N^2$ operations needed to evaluate the entire image at the highest resolution. In some situations, low resolution images of areas containing only low intensity scatterers may be operationally unacceptable. In such a case, the threshold could be set sufficiently low that the entire image will always be processed at the highest possible resolution. This technique will then be identical to the improved radial velocity search algorithm.

It would also be possible to carry out the various stages of the invention using processing systems configured in many different ways. These other approaches may provide even more significant savings in the processing requirements of the Non-Linear SAR.

**Claims**

1.  A method of deliberately forcing the phase returns across sequence of pulses (phase histories) from a target with radial velocity to be different from a target with cross-range displacement in Synthetic Aperture Radar (SAR).

2.  A method according to claim 1, for using a novel processing technique to separate the phase histories of targets with radial velocity from targets with cross-range displacement, giving accurate estimates of both the actual position and radial velocity of every scatterer within the scene regardless of their motion.

3.  A method according to claim 1, for exploiting the acceleration of the phase centre of a synthetic aperture radar (SAR).

4.  A method according to claim 3, wherein the phase centre acceleration is generated electronically or by physically accelerating the SAR antenna mounting or the platform on which it is carried.

5.  A method according to claim 4, wherein the phase centre acceleration is used to calculate the expected phase history of a scatterer (ie the expected phase of each pulse received from that scatterer) that has a trial radial velocity $v$ and is in the pixel of interest at time $t = t_i$.

6.  A method according to claim 4, wherein a series of phase histories are calculated: one for each radial velocity $v$ within the unambiguous ambit given by the radar's Pulse Repetition Frequency (PRF).

7.  A method according to claim 4, wherein the received SAR signal corresponding to the down-range position of the pixel is then correlated against each of the phase histories the peak amplitude of which gives a measure of the scatterer's Radar Cross Section (RCS).

8.  A method according to claim 7, wherein improved velocity search replaces the correlation of every phase history by first deriving a coarse approximation of the target's radial velocity and the amplitude of the correlation and this result is then used in an iterative process, refining the estimates of radial velocity and amplitude at each stage.

9.  A method according to claim 7, wherein the correlation integral can be applied as two Fourier transforms followed by an inverse Fourier transform, all three operations employing the standard, well documented, Fast Fourier Transform algorithm.

10. A method according to claim 7 wherein concentrating only on regions of the image containing bright scatterers replaces the correlation of every phase history by mapping these regions at the maximum achievable resolution, while regions containing only low intensity scatterers would be processed at a reduced resolution.

11. A synthetic aperture radar system arranged to carry out the method of any preceding claim.

12. A method as claimed in claim 1 and substantially as hereinbefore described with reference to the accompanying drawings.

Doppler frequency

time

**Received Doppler :**

— · · —  from a stationary scatterer in the centre of the scene

············  from a stationary scatterer with cross-range offset

— — — —  from a moving scatterer in the centre of the scene

Figure 1

IMU/GPS Position →

| Measure Platform Position Relative to Aperture Datum over the Integration Period |
| Calculate Expected Phase Sequence for Every Pixel & Velocity Combination |

Received Signals →

| Correlate Expected Phase Sequences against Received Signal Phase History |
| Correlate Expected Phase Sequences against Received Signal Phase History |

| Save Maximum Response over Velocity Search |
| Save Maximum Response over Velocity Search |

→ Cross-Range Search

↘ Velocity Search

Figure 2

Figure 3

**European Patent Office**

## EUROPEAN SEARCH REPORT

Application Number

EP 06 02 2989

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIGURS G J ET AL: "Non-linear synthetic aperture radar techniques" 2005 EUROPEAN RADAR CONFERENCE UK UK, UK, 6 October 2005 (2005-10-06), - 7 October 2005 (2005-10-07) pages 13-16, XP002427936 ISBN: 2-9600551-3-6 * the whole document * ----- | 1-12 | INV. G01S13/90 |
| X | EP 1 674 884 A (EADS DEUTSCHLAND GMBH [DE]) 28 June 2006 (2006-06-28) * the whole document * ----- | 1-12 | |
| A | US 5 122 803 A (STANN BARRY L [US] ET AL) 16 June 1992 (1992-06-16) ----- | | |
| A | US 5 777 573 A (KLAUSING HELMUT [DE] ET AL) 7 July 1998 (1998-07-07) ----- | | |

TECHNICAL FIELDS SEARCHED (IPC)

G01S

The present search report has been drawn up for all claims

| Place of search | Date of completion of the search | Examiner |
|---|---|---|
| Munich | 3 April 2007 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 02 2989

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2007

| Patent document cited in search report | | Publication date | Patent family member(s) | | Publication date |
|---|---|---|---|---|---|
| EP 1674884 | A | 28-06-2006 | DE 102004061486 | A1 | 06-07-2006 |
| US 5122803 | A | 16-06-1992 | NONE | | |
| US 5777573 | A | 07-07-1998 | DE 19528613 | A1 | 06-02-1997 |
| | | | EP 0757259 | A1 | 05-02-1997 |
| | | | JP 3121544 | B2 | 09-01-2001 |
| | | | JP 9171076 | A | 30-06-1997 |
| | | | RU 2168741 | C2 | 10-06-2001 |